# EUROPÄISCHE PATENTSCHRIFT

(11) **EP 3 332 348 B1**
(45) Veröffentlichungstag und Bekanntmachung des Hinweises auf die Patenterteilung: **15.07.2020**
(21) Anmeldenummer: 16748263.7
(22) Anmeldetag: 25.07.2016
(51) Int. Cl.: G06F 21/62

(54) **VERFAHREN ZUM BETREIBEN EINES KRAFTFAHRZEUGS UND SYSTEM ZUM BETREIBEN EINES KRAFTFAHRZEUGS**
METHOD FOR OPERATING A MOTOR VEHICLE, AND SYSTEM FOR OPERATING A MOTOR VEHICLE
PROCÉDÉ DE FONCTIONNEMENT D'UN VÉHICULE AUTOMOBILE ET SYSTÈME DE FONCTIONNEMENT D'UN VÉHICULE AUTOMOBILE

(30) Priorität: 05.08.2015 DE 102015010203
(43) Veröffentlichungstag der Anmeldung: 13.06.2018
(73) Patentinhaber: Audi AG, 85045 Ingolstadt (DE)
(72) Erfinder: SELLSCHOPP, Stefan, 85221 Dachau (DE)
(86) Internationale Anmeldenummer: PCT/EP2016/001289
(87) Internationale Veröffentlichungsnummer: WO 2017/020999

(56) Entgegenhaltungen:
- EP-A1- 2 333 636
- DE-A1-102004 049 297
- DE-A1-102008 008 108

## Beschreibung

Die Erfindung betrifft ein Verfahren zum Betreiben eines Kraftfahrzeugs sowie ein System zum Betreiben eines Kraftfahrzeugs.

Die DE 10 2009 025 585 A1 zeigt eine Vorrichtung zur dezentralen Funktionsfreischaltung eines Steuergeräts eines Fahrzeugs. Die Vorrichtung umfasst einen Produktionsserver zum Übertragen von Freischaltdaten. Ferner weist die Vorrichtung ein Freischaltmodul auf, welches zwischen dem Produktionsserver und dem Steuergerät schaltbar ist, wobei mittels des Freischaltmoduls eine begrenzte Anzahl von Freischaltungen unabhängig von dem Produktionsserver durchführbar ist.

Die DE 10 2004 049 297 A1 zeigt ein Verfahren zum Aktivieren und Deaktivieren von Fahrzeug-Steuergerätefunktionen. Die Aktivierung beziehungsweise Deaktivierung der Steuergerätfunktionen erfolgt dabei über eine Kommunikationsschnittstelle.

Die DE 10 2006 052 048 A1 zeigt ein Verfahren zur Aktivierung und Deaktivierung von Funktionen eines Kraftfahrzeugs. Zur Aktivierung und/oder Deaktivierung einer Funktion wird nach Auslieferung des Kraftfahrzeugs händlerseitig beziehungsweise werkstattseitig eine Umrüstanfrage generiert. Auf Basis der Umrüstanfrage wird herstellerseitig ein funktionsabhängiger und fahrzeugabhängiger Code generiert. Der funktionsabhängige und fahrzeugabhängige Code wird händlerseitig beziehungsweise werkstattseitig in ein Diagnosegerät eingegeben und über das Diagnosegerät an ein kraftfahrzeugseitiges Steuergerät übermittelt, wobei das Steuergerät den Code überprüft und in Abhängigkeit der Überprüfung die Aktivierung beziehungsweise Deaktivierung der jeweiligen Funktion zulässt oder nicht zulässt.

Die DE 10 2008 008108 A1 beschreibt ein Verfahren, bei welchem ein Freischaltbefehl in Form eines Freischaltcodes für eine ganz bestimmte einzelne Funktion von einer zentralen Datenverarbeitungseinheit an ein Kraftfahrzeug übertragen wird.

Die DE 10 2004 049297 A1 zeigt ein Verfahren zur Aktivierung und Deaktivierung von Funktionen eines Kraftfahrzeugs. Zur Aktivierung und/oder Deaktivierung einer Funktion wird nach Auslieferung des Kraftfahrzeugs händlerseitig beziehungsweise werkstattseitig eine Umrüstanfrage generiert. Auf Basis der Umrüstanfrage wird ein funktionsabhängiger und fahrzeugabhängiger Code generiert. Der funktionsabhängige und fahrzeugabhängige Code wird in ein Diagnosegerät eingegeben und über das Diagnosegerät an ein kraftfahrzeugseitiges Steuergerät übermittelt, wobei das Steuergerät den Code überprüft und in Abhängigkeit von der Überprüfung die Aktivierung beziehungsweise Deaktivierung der jeweiligen Funktion zulässt oder nicht zulässt.

Die De 102 12 259 A1 beschreibt ein Fahrzeugsystem mit mittels Softwaremodulen realisierten Funktionalitäten. Ein Fahrzeug ist mit Mitteln zur Kommunikation mit einer Zentrale ausgestattet. Dabei kann es sich zum Beispiel um eine Telekommunikationsschnittstelle des Kraftfahrzeugs und/oder eine für die Fahrzeugwartung vorgesehene Wartungsschnittstelle handeln. Eine Sperrung und/oder Entsperrung von Funktionalitäten des Kraftfahrzeugs wird durch die Zentrale initiiert.

Es ist die Aufgabe der vorliegenden Erfindung, ein Verfahren sowie ein System bereitzustellen, mittels welchen auf besonders einfache Weise fahrzeuginterne Funktionen eines Kraftfahrzeugs aktiviert und deaktiviert werden können.

Diese Aufgabe wird durch ein Verfahren sowie durch ein System zum Betreiben eines Kraftfahrzeugs mit den Merkmalen der unabhängigen Patentansprüche gelöst. Vorteilhafte Ausgestaltungen mit zweckmäßigen und nicht trivialen Weiterbildung der Erfindung sind in den abhängigen Ansprüchen angegeben.

Bei dem erfindungsgemäßen Verfahren zum Betreiben eines Kraftfahrzeugs wird eine Fahrzeugfunktionsliste mittels einer fahrzeugexternen Servereinrichtung erzeugt, in welcher festgelegt wird, welche fahrzeuginternen Funktionen des Kraftfahrzeugs eine Nutzungsberechtigung aufweisen und welche Funktionen des Kraftfahrzeugs keine Nutzungsberechtigung aufweisen. Anschließend wird die Fahrzeugfunktionsliste drahtlos von der fahrzeugexternen Servereinrichtung an eine Steuereinrichtung des Kraftfahrzeugs übertragen. Danach werden jeweilige zum Betreiben der fahrzeuginternen Funktionen des Kraftfahrzeugs ausgelegte Steuergeräte gemäß der übertragenen Fahrzeugfunktionsliste mittels der Steuereinrichtung derart angesteuert, dass diejenigen fahrzeuginternen Funktionen des Kraftfahrzeugs aktiviert werden, welche eine Funktionsberechtigung aufweisen und noch deaktiviert sind, und diejenigen fahrzeuginternen Funktionen des Kraftfahrzeugs deaktiviert werden, welche keine Funktionsberechtigung aufweisen und noch aktiviert sind.

Bei den fahrzeuginternen Funktionen des Kraftfahrzeugs handelt es sich um derartige Funktionen, welche fahrzeugseitig ohne eine Datenverbindung mit fahrzeugexternen Einheiten betrieben werden können. Bei den fahrzeuginternen Funktionen kann es sich beispielsweise um einen Tempomat, um einen Abstandsregeltempomat, um einen Autopiloten oder dergleichen handeln.

Mittels des erfindungsgemäßen Verfahrens ist es also möglich, unterschiedliche fahrzeuginterne Funktionen des Kraftfahrzeugs über den fahrzeugexternen Server abgesichert an- beziehungsweise auszuschalten. Dies ermöglicht insbesondere einen nachträglichen Verkauf und auch eine nachträgliche Abschaltung von bestimmten fahrzeuginternen Funktionen des Kraftfahrzeugs. Insbesondere ein nachträglicher Verkauf von fahrzeuginternen Funktionen könnte ein weiteres Umsatzpotential für Fahrzeughersteller erschließen, wobei durch das erfindungsgemäße Verfahren ein besonders einfacher Prozess zur Freischaltung der fahrzeuginternen Funktionen ermöglicht wird.

Darüber hinaus ist es mittels des erfindungsgemäßen Verfahrens insbesondere möglich, ein nachträgliches Abschalten bestimmter fahrzeuginterner Funktionen vorzunehmen. Dies kann beispielsweise aus rechtlicher Sicht entscheidend sein, wenn es darum geht, neue Fahrerassistenzsysteme anbieten zu können und auf neue Erkenntnisse reagieren zu können, ohne Rückrufaktionen durchführen zu müssen. Denn mittels des erfindungsgemäßen Verfahrens ist es auch möglich, gezielt fahrzeuginterne Funktionen, welche beispielsweise derartige neue Fahrerassistenzsysteme betreffen, zu deaktivieren.

Mittels der fahrzeugexternen Servereinrichtung kann also konfiguriert werden, welche fahrzeuginternen Funktionen das betreffende Kraftfahrzeug haben soll. Darüber hinaus ist das Verfahren insbesondere auch dazu ausgelegt, bei mehreren unterschiedlichen Kraftfahrzeugen jeweilige fahrzeuginterne Funktionen zu aktivieren und zu deaktivieren. Insbesondere ist es dabei auch möglich, für eine ganze Gruppe von unterschiedlichen Kraftfahrzeugen auszuwählen, welche jeweiligen fahrzeuginternen Funktionen der betreffenden Kraftfahrzeuge aktiviert oder deaktiviert werden sollen.

Vorzugsweise kann das Kraftfahrzeug sämtliche zum Betreiben der fahrzeuginternen Funktionen erforderlichen Mittel in Form von Software und Hardware bereits ab Werk aufweisen. Durch das Erzeugen und Übermitteln der Fahrzeugfunktionsliste kann nachträglich, also nach der Herstellung des Kraftfahrzeugs, noch festgelegt werden, welche der fahrzeuginternen Funktionen eine Nutzungsberechtigung aufweisen sollen und welche nicht. Die Fahrzeugfunktionsliste kann bei Bedarf auch dynamisch immer wieder neu generiert werden, wobei die jeweiligen Nutzungsberechtigungen für die unterschiedlichen fahrzeuginternen Funktionen bedarfsgerecht festgelegt werden können. Zur Übermittlung der Fahrzeugfunktionsliste von der fahrzeugexternen Servereinrichtung an die Steuereinrichtung des Kraftfahrzeugs kann die Steuereinrichtung selbst oder das Kraftfahrzeug beispielsweise ein Kommunikationsmodul mit einer integrierten SIM-Karte aufweisen. Dabei kann es vorgesehen sein, dass die fahrzeugexterne Servereinrichtung immer dann versucht, eine drahtlose Verbindung mit dem betreffenden Kraftfahrzeug aufzubauen, sobald eine neue Fahrzeugfunktionsliste generiert worden ist. Sobald eine drahtlose Verbindung zwischen der fahrzeugexternen Servereinrichtung und dem Kraftfahrzeug hergestellt ist, kann sodann die neu erstellte Fahrzeugfunktionsliste an die Steuereinrichtung des Kraftfahrzeugs übertragen werden, infolgedessen die betreffenden fahrzeuginternen Funktionen des Kraftfahrzeugs entsprechend der übertragenen Fahrzeugfunktionsliste aktiviert beziehungsweise deaktiviert werden.

Eine vorteilhafte Ausführungsform der Erfindung sieht vor, dass die Fahrzeugfunktionsliste erzeugt wird, sobald die fahrzeugexterne Servereinrichtung zumindest eine Aktivierungsvorgabe bezüglich wenigstens einer der fahrzeuginternen Funktionen erzeugt hat, wobei für diese fahrzeuginterne Funktion eine Nutzungsberechtigung erteilt wird. Beispielsweise ist es möglich, dass ein Besitzer des Kraftfahrzeugs ein bestimmtes Abonnement für eine bestimmte fahrzeuginterne Funktion abgeschlossen hat. Beispielsweise kann er dies über sein Smartphone, über einen PC, über einen Tablet Computer oder auch über eine fahrzeuginterne Schnittstelle vornehmen. Sobald dieses Abonnement abgeschlossen worden ist, wird eine entsprechende Aktivierungsvorgabe bezüglich der betreffenden fahrzeuginternen Funktion erzeugt, infolgedessen die Fahrzeugfunktionsliste entsprechend erzeugt wird. Auch nach der Herstellung des Kraftfahrzeugs ist es also auf einfache Weise für eine Person möglich, nachträglich, vorzugsweise gegen eine entsprechende Bezahlung, entsprechende fahrzeuginterne Funktionen freizuschalten, welche bisher noch keine Nutzungsberechtigung hatten und bis dahin auch noch nicht ausgeführt werden konnten.

Es ist erfindungsgemäß vorgesehen, dass die Fahrzeugfunktionsliste erzeugt wird, sobald die fahrzeugexterne Servereinrichtung zumindest eine Deaktivierungsvorgabe bezüglich wenigstens einer der fahrzeuginternen Funktionen erzeugt hat, wobei für diese fahrzeuginterne Funktion keine Nutzungsberechtigung erteilt wird. Mit anderen Worten wird für die betreffende fahrzeuginterne Funktion die Nutzungsberechtigung also entzogen, sofern bis dahin noch eine Nutzungsberechtigung bestand.

In diesem Zusammenhang kann es beispielsweise vorgesehen sein, dass die Deaktivierungsvorgabe erzeugt wird, sobald eine vorgegebene Betriebsdauer für die fahrzeuginterne Funktion abgelaufen ist. Sollte der Fahrzeuginhaber beispielsweise ein zeitlich begrenztes Abonnement für eine bestimmte fahrzeuginterne Funktion abgeschlossen haben, wobei die Laufzeit des Abonnements abgelaufen ist, so wird eine entsprechende Deaktivierungsvorgabe bezüglich der betreffenden fahrzeuginternen Funktion erzeugt, infolgedessen die Fahrzeugfunktionsliste erzeugt und anschließend an die Steuereinrichtung des Kraftfahrzeugs übertragen wird. Infolgedessen wird die betreffende fahrzeuginterne Funktion deaktiviert. Um den Besitzer oder einen anderen Fahrer des Kraftfahrzeugs darauf hinzuweisen, dass bald eine bestimmte fahrzeuginterne Funktion deaktiviert wird, kann es vorgesehen sein, dass eine entsprechende Warnmeldung, zum Beispiel eine Woche vor Ablauf eines bestimmten Abonnements bezüglich einer fahrzeuginternen Funktion, mittels einer fahrzeugseitigen Anzeigeeinrichtung angezeigt wird.

Zudem ist es erfindungsgemäß vorgesehen, dass die Deaktivierungsvorgabe erzeugt wird, sobald eine Fehlfunktion der fahrzeuginternen Funktion oder einer anderen fahrzeuginternen Funktion vorliegt. Sollte beispielsweise seitens eines Fahrzeugherstellers erkannt werden, dass es gewisse Probleme mit einem bestimmten Fahrerassistenzsystem gibt, so muss der Fahrzeughersteller keine aufwändige Rückrufaktion starten. Stattdessen kann dieser bewirken, dass eine entsprechende Fahrzeugfunktionsliste auf der fahrzeugexternen Servereinrichtung generiert wird, gemäß welcher die Nutzungsberechtigung hinsichtlich der kritischen fahrzeuginternen Funktion entzogen wird. Kritische fahrzeuginterne Funktionen, insbesondere falls diese aufgrund von Fehlfunktionen ein Betriebsrisiko darstellen sollten, können so auf einfache Weise aus der Ferne deaktiviert werden. Vorzugsweise wird dabei eine Meldung innerhalb des betreffenden Kraftfahrzeugs ausgegeben, welche fahrzeuginterne Funktion aus welchen Gründen gerade betroffen und deswegen deaktiviert worden ist. Sobald das Problem mit der betreffenden fahrzeuginternen Funktion behoben worden sein sollte, kann anschließend wieder die fahrzeuginterne Funktion über die fahrzeugexterne Servereinrichtung freigeschaltet werden. Darüber hinaus ist es auch möglich, dass die Deaktivierungsvorgabe erzeugt wird, sobald eine Änderung einer rechtlichen Rahmenbedingung vorliegt oder auch aufgrund weiterer, anderer Einschätzungen. Zum Beispiel kann die Deaktivierungsvorgabe erzeugt werden, falls mittels einer Anzeigeeinrichtung im Kraftfahrzeug zuvor noch darstellbare Inhalte, wie zum Beispiel Videos, während der Fahrt nicht mehr angezeigt können werden sollen, weil beispielsweise die Rechtsabteilung des Automobilherstellers ihre Meinung diesbezüglich geändert hat, sich die Rechtsprechung in einem bestimmten Land diesbezüglich geändert hat oder auch weil der Automobilhersteller diesbezüglich vorsichtiger sein möchte.

Gemäß einer weiteren vorteilhaften Ausführungsform der Erfindung ist es vorgesehen, dass die Fahrzeugfunktionsliste nur dann von dem fahrzeugexternen Server an die Steuereinrichtung des Kraftfahrzeugs übertragen wird, falls die Steuereinrichtung einen vorgegebenen Authentifizierungsschlüssel an die fahrzeugexterne Servereinrichtung übermittelt hat. Dadurch kann sichergestellt werden, dass nur berechtigte Kraftfahrzeuge auch die Fahrzeugfunktionsliste abrufen können, infolgedessen entsprechend der abgerufenen Fahrzeugfunktionsliste die betreffenden fahrzeuginternen Funktionen aktiviert beziehungsweise deaktiviert werden.

Eine weitere vorteilhafte Ausführungsform der Erfindung sieht vor, dass der Authentifizierungsschlüssel fahrzeugspezifisch oder benutzerkennungsspezifisch in der Steuereinrichtung hinterlegt wird. Fahrzeugspezifisch kann beispielsweise bedeuten, dass der Authentifizierungsschlüssel unter anderen eine Fahrgestellnummer oder eine andere Identitätsmöglichkeit umfasst, mittels welcher eindeutig festgestellt werden kann, ob es sich um ein bestimmtes Kraftfahrzeug handelt. Darüber hinaus kann es auch vorgesehen sein, dass die Fahrzeugfunktionsliste einer bestimmten Benutzerkennung zugeordnet wird. In letzterem Fall ist es auch möglich, dass die Fahrzeugfunktionsliste fahrzeugübergreifend von einer bestimmten Person, welcher eine bestimmte Benutzerkennung zugeordnet worden ist, genutzt werden kann. Die Funktionsberechtigung ist in diesem Fall also nicht nur auf ein bestimmtes Kraftfahrzeug beschränkt, sondern benutzerkennungsspezifisch vergeben. Sollte ein Fahrzeughalter beispielsweise eine Vielzahl von fahrzeuginternen Funktionen kostenpflichtig abonniert haben, so kann er auch bei einem Fahrzeugwechsel diese fahrzeuginternen Funktionen weiterhin nutzen, indem er mit seinem neuen Fahrzeug die entsprechende Fahrzeugfunktionsliste mit den unterschiedlichen Berechtigungsfreigaben herunterlädt. Ferner ist es auch möglich, dass eine bestimmte Person die unterschiedlichen fahrzeuginternen Funktionen auf unterschiedlichen Kraftfahrzeugen nutzt.

In weiterer vorteilhafter Ausgestaltung der Erfindung ist es vorgesehen, dass nur diejenigen fahrzeuginternen Funktionen aktiviert und deaktiviert werden, für welche jeweilige, zum Betreiben der fahrzeuginternen Funktion ausgelegte Steuergeräte einen vorgegebenen Authentifizierungsschlüssel an die Steuereinrichtung übermittelt haben. Es wird also nochmals fahrzeugintern überprüft, ob die jeweiligen Steuergeräte überhaupt dazu berechtigt sind, die fahrzeuginternen Funktionen gemäß der übermittelten Fahrzeugfunktionsliste zu betreiben. Dadurch wird die Manipulationssicherheit fahrzeugintern nochmals erhöht. Durch einen fahrzeuginternen Manipulationsschutz wird erfindungsgemäß zudem sichergestellt, dass die übertragene Fahrzeugfunktionsliste nicht verändert werden kann. Dazu könnte ein abzufragender Ort, zum Beispiel in einem abgesicherten Steuergerät, ähnlich wie mit einem Serverzertifikat geschützt werden, beispielhaft über eine Root CA (Kurzbezeichnung für die sogenannte Root Certificate Authority) oder basierend auf einem Diebstahlschutzgeheimnis. Die Prüfung der Richtigkeit der Fahrzeugfunktionsliste erfolgt vorzugsweise zusätzlich, beispielsweise indem ein Abgleich eines mitgelieferten Hashwertes erfolgt.

Das erfindungsgemäße System umfasst zumindest ein Kraftfahrzeug mit einer Steuereinrichtung und eine kraftfahrzeugexterne Servereinrichtung, welche dazu ausgelegt sind, das erfindungsgemäße Verfahren oder eine vorteilhafte Ausführungsform des erfindungsgemäßen Verfahrens durchzuführen. Vorteilhafte Ausgestaltungen des erfindungsgemäßen Verfahrens sind dabei als vorteilhafte Ausgestaltungen des erfindungsgemäßen Systems anzusehen, wobei das System insbesondere Mittel zur Durchführung der Verfahrensschritte aufweist.

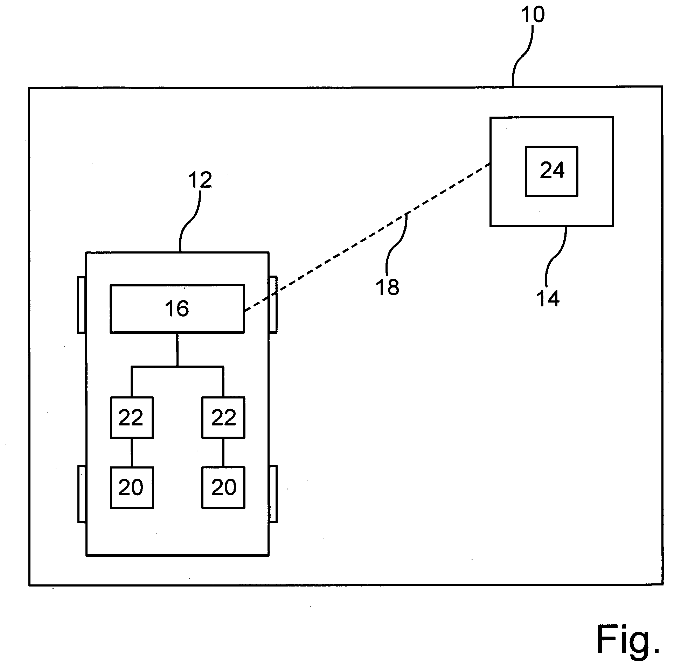

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in der einzigen Figur eine schematische Darstellung eines Systems, welches ein Kraftfahrzeug und eine fahrzeugexterne Servereinrichtung umfasst, mittels welcher unterschiedliche fahrzeuginterne Funktionen des Kraftfahrzeugs aktiviert und deaktiviert werden können.

Ein System 10 umfasst zumindest ein Kraftfahrzeug 12 sowie eine fahrzeugexterne Servereinrichtung 14. Vorzugsweise weist das System 10 eine Mehrzahl von unterschiedlichen Kraftfahrzeugen 12 auf, welche in der vorliegenden Darstellung jedoch nicht gezeigt sind. Die nachfolgenden Erläuterungen gelten in analoger Weise auch für den Betrieb von mehreren Kraftfahrzeugen.

Das Kraftfahrzeug 12 umfasst eine Steuereinrichtung 16, welche dazu ausgebildet ist, eine drahtlose Verbindung 18 mit der fahrzeugexternen Servereinrichtung 14 aufzubauen. Umgekehrt ist die fahrzeugexterne Servereinrichtung genauso dazu ausgebildet, die drahtlose Verbindung 18 aufzubauen. Die fahrzeugexterne Servereinrichtung 14 dient dazu, unterschiedlichste fahrzeuginterne Funktionen 20 zu aktivieren und zu deaktivieren. Darüber hinaus umfasst das Kraftfahrzeug 16 noch jeweilige Steuergeräte 22, welche dazu ausgebildet sind, die jeweiligen fahrzeuginternen Funktionen 20 zu betreiben. Bei den fahrzeuginternen Funktionen 20 kann es sich beispielsweise um unterschiedliche Fahrerassistenzsysteme, wie beispielsweise einen Abstandsregeltempomaten, einen Autopiloten und dergleichen handeln. Nachfolgend wird ein Verfahren näher erläutert, bei welchem die fahrzeuginternen Funktionen 20 aktiviert beziehungsweise deaktiviert werden.

Zunächst wird mittels der fahrzeugexternen Servereinrichtung 14 eine Fahrzeugfunktionsliste 24 generiert, in welcher festgelegt wird, welche der fahrzeuginternen Funktionen 20 des Kraftfahrzeugs 12 eine Nutzungsberechtigung aufweisen sollen und welche der fahrzeuginternen Funktionen 20 des Kraftfahrzeugs 12 keine Nutzungsberechtigung aufweisen sollen. Die Fahrzeugfunktionsliste 24 kann beispielsweise dann erzeugt werden, sobald die fahrzeugexterne Servereinrichtung 14 zumindest eine Aktivierungsvorgabe bezüglich wenigstens einer der fahrzeuginternen Funktionen 20 erzeugt hat, wobei für diese fahrzeuginterne Funktionen 20 eine Nutzungsberechtigung erteilt wird.

Beispielsweise kann es vorgesehen sein, dass ein Benutzer des Kraftfahrzeugs 12 über ein Abonnement eine der fahrzeuginternen Funktionen 20 freischalten lassen kann, welche er bislang noch nicht verwenden konnte. In diesem Fall wird die besagte Aktivierungsvorgabe hinsichtlich der betreffenden fahrzeuginternen Funktion 20 erzeugt, wobei für diese fahrzeuginterne Funktion eine Nutzungsberechtigung innerhalb der generierten Fahrzeugfunktionsliste 24 erzeugt wird.

Der Nutzer des Kraftfahrzeugs 12 kann beispielsweise über sein Smartphone, einen PC, über einen Tablet Computer oder auch über eine hier nicht dargestellte Schnittstelle des Kraftfahrzeugs 12 die unterschiedlichen fahrzeuginternen Funktionen 20 auswählen und vorzugsweise gegen Bezahlung freischalten lassen. Dabei kann es vorgesehen sein, dass gewisse Abonnements hinsichtlich der fahrzeuginternen Funktionen 20 eine Laufzeitbeschränkung aufweisen.

Die Fahrzeugfunktionsliste 24 wird auch dann mittels der fahrzeugexternen Servereinrichtung 14 erzeugt, sobald die fahrzeugexterne Servereinrichtung 14 zumindest eine Deaktivierungsvorgabe bezüglich wenigstens einer der fahrzeuginternen Funktionen 20 erzeugt hat, wobei für diese fahrzeuginternen Funktionen 20 keine Nutzungsberechtigung erteilt beziehungsweise eine zuvor erteilte Nutzungsberechtigung entzogen wird. Beispielsweise wird die besagte Deaktivierungsvorgabe erzeugt, sobald eine vorgegebene Betriebsdauer für eine der fahrzeuginternen Funktionen 20 abgelaufen ist. Zum Beispiel kann es sein, dass die Laufzeit von einem bestimmten Abonnement für eine der fahrzeuginternen Funktionen 20 abgelaufen oder gekündigt worden ist. In einem derartigen Fall wird die besagte Deaktivierungsvorgabe für die betreffende fahrzeuginterne Funktion erzeugt, infolgedessen eine entsprechende Fahrzeugfunktionsliste 24 erzeugt wird, in welcher festgelegt wird, dass der betreffenden fahrzeuginternen Funktion 20 die Nutzungsberechtigung entzogen worden ist.

Alternativ oder zusätzlich ist es auch möglich, dass beispielsweise einem Hersteller des Kraftfahrzeugs 12 auffällt, dass eine fahrzeuginterne Funktion 20 gewisse Fehler aufweist. Statt eine groß angelegte Rückrufaktion für alle betroffenen Kraftfahrzeuge 12 zu starten, kann auf einfache Weise mittels der fahrzeugexternen Servereinrichtung 14 festgelegt werden, dass für die betreffende fahrzeuginterne Funktion 20 - nicht nur für das hier gezeigte Kraftfahrzeug 12, sondern für alle davon betroffenen Kraftfahrzeuge - die Nutzungsberechtigung zumindest temporär entzogen werden soll.

Sobald die Fahrzeugfunktionsliste 24 mittels der fahrzeugexternen Servereinrichtung 14 erzeugt worden ist, wird die Fahrzeugfunktionsliste 24 über die drahtlose Verbindung 18 an die Steuereinrichtung 16 des Kraftfahrzeugs 12 übertragen. Die Steuereinrichtung 16 selbst kann dafür beispielsweise eine entsprechend ausgebildete Kommunikationsschnittstelle aufweisen, wobei es aber auch genauso gut möglich ist, dass das Kraftfahrzeug 12 eine separate Kommunikationsschnittstelle aufweist, welche die Fahrzeugfunktionsliste 24 über die drahtlose Verbindung 18 abruft beziehungsweise empfängt und dann der Steuereinrichtung 16 bereitstellt.

Die Steuereinrichtung 16 steuert die jeweiligen zum Betreiben der fahrzeuginternen Funktionen 20 des Kraftfahrzeugs 12 ausgelegten Steuergeräte 22 anschließend gemäß der übertragenen und empfangenen Fahrzeugfunktionsliste 24 derart an, dass diejenigen fahrzeuginternen Funktionen 20 des Kraftfahrzeugs 12 aktiviert werden, welche eine Funktionsberechtigung gemäß der erhaltenen Fahrzeugfunktionsliste 24 aufweisen und noch deaktiviert sind, und diejenigen fahrzeuginternen Funktionen 20 des Kraftfahrzeugs 12 deaktiviert werden, welche gemäß der empfangenen Fahrzeugfunktionsliste 24 keine Funktionsberechtigung aufweisen und noch aktiviert sind.

Um die Sicherheit beim Übertragen der Fahrzeugfunktionsliste 24 zu steigern, kann es dabei vorgesehen sein, dass die Fahrzeugfunktionsliste 24 nur dann von dem fahrzeugexternen Server 14 an die Steuereinrichtung 16 des Kraftfahrzeugs 12 übertragen wird, falls die Steuereinrichtung 16 einen vorgegebenen Authentifizierungsschlüssel an die fahrzeugexterne Servereinrichtung 14 übermittelt hat. Der Authentifizierungsschlüssel kann dabei fahrzeugspezifisch oder auch benutzerkennungsspezifisch in der Steuereinrichtung 16 hinterlegt sein.

Fahrzeugspezifisch bedeutet, dass die Fahrzeugfunktionsliste 24 nur dann an die Steuereinrichtung 16 übertragen wird, falls diese nachweislich auch in dem Kraftfahrzeug 12 verbaut ist. Benutzerkennungsspezifisch kann beispielsweise bedeuten, dass eine Person die Fahrzeugfunktionsliste 24 unabhängig von dem Kraftfahrzeug 12 fahrzeugübergreifend nutzen kann, beispielsweise weil er mehrere Fahrzeuge besitzt oder auch häufig in unterschiedlichen Mietwagen fährt. Im Falle der benutzerkennungsspezifischen Authentifizierung kann es beispielsweise vorgesehen sein, dass sich die Person in dem Kraftfahrzeug 12 zunächst identifizieren muss. Zum Beispiel kann dies durch Eingabe eines Login-Namens und eines Passworts erfolgen. Alternativ oder zusätzlich kann es beispielsweise auch vorgesehen sein, dass die betreffende Person über ein fahrzeuginternes Kamerasystem erfasst und identifiziert wird. Sobald die Person ihre Benutzerkennung im Kraftfahrzeug 12 hinterlegt hat, kann dann die Fahrzeugfunktionsliste 24 empfangen werden. Gleiches gilt auch für andere hier nicht gezeigte Kraftfahrzeuge.

Um wiederum die interne Kommunikation zwischen der Steuereinrichtung 16 und den Steuergeräten 22 abzusichern, kann es zusätzlich noch vorgesehen sein, dass nur diejenigen fahrzeuginternen Funktionen 20 aktiviert und deaktiviert werden, für welche die jeweiligen zum Betreiben der fahrzeuginternen Funktionen 20 ausgelegten Steuergeräte 22 ebenfalls einen vorgegebenen Authentifizierungsschlüssel an die Steuereinrichtung 16 übermittelt haben. Beispielsweise könnte es vorkommen, dass über eine kabelgebundene Verbindung eine nicht autorisierte Fahrzeugfunktionsliste 24 auf die Steuereinrichtung 16 aufgespielt worden ist. Sollten die Steuergeräte 22 dafür aber nicht über einen entsprechenden Authentifizierungsschlüssel verfügen, so bleiben die Einträge in der Fahrzeugfunktionsliste 24 auswirkungslos auf die Aktivierung und Deaktivierung der fahrzeuginternen Funktionen 20.

Mittels des erläuterten Systems 10 und des erläuterten Verfahrens zum Betreiben des Systems 10 wird also auf einfache Weise eine Möglichkeit bereitgestellt, mittels welcher aus der Ferne über eine fahrzeugexterne Servereinrichtung 14 unterschiedliche fahrzeuginternen Funktionen 20 deaktiviert und aktiviert werden können.

## Patentansprüche

1. Verfahren zum Betreiben eines Kraftfahrzeugs (12), mit den Schritten:
- Erzeugen einer Fahrzeugfunktionsliste (24) mittels einer fahrzeugexternen Servereinrichtung (14), in welcher festlegt wird, welche fahrzeuginternen Funktionen (20) des Kraftfahrzeugs (12) eine Nutzungsberechtigung aufweisen und welche fahrzeuginternen Funktionen (20) des Kraftfahrzeugs (12) keine Nutzungsberechtigung aufweisen;
- drahtloses Übertragen der Fahrzeugfunktionsliste (24) von der fahrzeugexternen Servereinrichtung (14) an eine Steuereinrichtung (16) des Kraftfahrzeugs (12);
- Ansteuern jeweiliger zum Betreiben der fahrzeuginternen Funktionen (20) des Kraftfahrzeugs (12) ausgelegter Steuergeräte (22) gemäß der übertragenen Fahrzeugfunktionsliste (24) mittels der Steuereinrichtung (16) derart, dass diejenigen fahrzeuginternen Funktionen (20) des Kraftfahrzeugs (12) aktiviert werden, welche eine Funktionsberechtigung aufweisen und noch deaktiviert sind, und diejenigen fahrzeuginternen Funktionen (20) des Kraftfahrzeugs (12) deaktiviert werden, welche keine Funktionsberechtigung aufweisen und noch aktiviert sind;
- wobei die Fahrzeugfunktionsliste (24) erzeugt wird, sobald die fahrzeugexterne Servereinrichtung (14) zumindest eine Deaktivierungsvorgabe bezüglich wenigstens einer der fahrzeuginternen Funktionen (20) erzeugt hat, wobei für diese fahrzeuginternen Funktionen (20) keine Nutzungsberechtigung erteilt wird;
- wobei die Deaktivierungsvorgabe erzeugt wird, sobald eine Fehlfunktion der fahrzeuginternen Funktion (20) oder einer anderen fahrzeuginternen Funktion (20) vorliegt;
- wobei durch einen fahrzeuginternen Manipulationsschutz sichergestellt wird, dass die übertragene Fahrzeugfunktionsliste (24) nicht verändert werden kann.

2. Verfahren nach Anspruch 1,
**dadurch gekennzeichnet, dass**
die Fahrzeugfunktionsliste (24) erzeugt wird, sobald die fahrzeugexterne Servereinrichtung (14) zumindest eine Aktivierungsvorgabe bezüglich wenigstens einer der fahrzeuginternen Funktionen (20) erzeugt hat, wobei für diese fahrzeuginterne Funktionen (20) eine Nutzungsberechtigung erteilt wird.

3. Verfahren nach Anspruch 1,
**dadurch gekennzeichnet, dass**
die Deaktivierungsvorgabe erzeugt wird, sobald eine vorgegebene Betriebsdauer für die fahrzeuginterne Funktion (20) abgelaufen ist.

4. Verfahren nach einem der vorhergehenden Ansprüche,
**dadurch gekennzeichnet, dass**
die Fahrzeugfunktionsliste (24) nur dann von dem fahrzeugexternen Server (14) an die Steuereinrichtung (16) des Kraftfahrzeugs (12) übertragen wird, falls die Steuereinrichtung (16) einen vorgegebenen Authentifizierungsschlüssel an die fahrzeugexterne Servereinrichtung (14) übermittelt hat.

5. Verfahren nach Anspruch 4,
**dadurch gekennzeichnet, dass**
der Authentifizierungsschlüssel fahrzeugspezifisch oder benutzerkennungsspezifisch in der Steuereinrichtung (16) hinterlegt wird.

6. Verfahren nach einem der vorhergehenden Ansprüche,
**dadurch gekennzeichnet, dass**
nur diejenigen fahrzeuginternen Funktionen (20) aktiviert und deaktiviert werden, für welche jeweilige, zum Betreiben der fahrzeuginternen Funktionen (20) ausgelegte Steuergeräte (22) einen vorgegebenen Authentifizierungsschlüssel an die Steuereinrichtung (16) übermittelt haben.

7. System (10), umfassend zumindest ein Kraftfahrzeug (12) mit einer Steuereinrichtung (16) und einer fahrzeugexternen Servereinrichtung (14), welche dazu ausgelegt sind, ein Verfahren nach einem der vorhergehenden Ansprüche durchzuführen.

## Claims

1. Method for operating a motor vehicle (12) having the following steps:
- a vehicle-external server apparatus (14) is used to generate a vehicle function list (24) which states which vehicle-internal functions (20) of the motor vehicle (12) have a use authorisation and which vehicle-internal functions (20) of the motor vehicle (12) do not have a use authorisation;
- the vehicle function list (24) is wirelessly transmitted from the vehicle-external server apparatus (14) to a control apparatus (16) of the motor vehicle (12);
- respective control devices (22) designed to operate the vehicle-internal functions (20) of the motor vehicle (12) are actuated according to the transmitted vehicle function list (24) by means of the control apparatus (16) such that the vehicle-internal functions (20) of the motor vehicle (12) which have a function authorisation and which are still deactivated are activated, and the vehicle-internal functions (20) of the motor vehicle (12) which do not have a function authorisation and which are still activated are deactivated;
- wherein the vehicle function list (24) is generated as soon as the vehicle-external server apparatus (14) has generated at least one deactivation specification with respect to at least one of the vehicle-internal functions (20), wherein no use authorisation is granted for these vehicle-internal functions (20);
- wherein the deactivation default is generated as soon as there is a malfunction of the vehicle-internal function (20) or another vehicle-internal function (20);
- wherein a vehicle-internal tamper protection ensures that the transmitted vehicle function list (24) cannot be changed.

2. Method according to claim 1,
**characterised in that**
the vehicle function list (24) is generated as soon as the vehicle-external server apparatus (14) has generated at least one activation specification with respect to at least one of the vehicle-internal functions (20), wherein a use authorisation is granted for these vehicle-internal functions (20).

3. Method according to claim 1,
**characterised in that**
the deactivation default is generated as soon as a predetermined operating time for the vehicle-internal function (20) has expired.

4. Method according to any one of the preceding claims,
**characterised in that**
the vehicle function list (24) is only transmitted from the vehicle-external server (14) to the control apparatus (16) of the motor vehicle (12) if the control apparatus (16) has transmitted a predetermined authentication key to the vehicle-external server apparatus (14).

5. Method according to claim 4,
**characterised in that**
the authentication key is stored in the control apparatus (16) in a vehicle-specific or user-identification-specific manner.

6. Method according to any one of the preceding claims,
**characterised in that**
only those vehicle-internal functions (20) are activated and deactivated for which respective control devices (22) designed to operate the vehicle-internal functions (20) have transmitted a predetermined authentication key to the control apparatus (16).

7. System (10) comprising at least one motor vehicle (12) having a control apparatus (16) and a vehicle-external server apparatus (14), which are designed to carry out a method according to any one of the preceding claims.

## Revendications

1. Procédé de fonctionnement d'un véhicule automobile (12), avec les étapes :
- production d'une liste de fonctions de véhicule (24) au moyen d'un appareil serveur (14) qui est externe au véhicule et dans lequel il est spécifié quelles fonctions (20), internes au véhicule, du véhicule automobile (12) présentent une autorisation d'utilisation et quelles fonctions (20), internes au véhicule, du véhicule automobile (12) ne présentent pas d'autorisation d'utilisation ;
- transmission sans fil de la liste de fonctions de véhicule (24) de l'appareil serveur (14) externe au véhicule à un appareil de commande (16) du véhicule automobile (12) ;
- commande des dispositifs de commande (22) respectifs conçus pour l'exploitation des fonctions (20), internes au véhicule, du véhicule automobile (12) conformément à la liste de fonctions de véhicule transmise (24) au moyen de l'appareil de commande (16) de telle sorte que sont activées celles des fonctions (20), internes au véhicule, du véhicule automobile (12) qui présentent une autorisation de fonction et qui sont encore désactivées et sont désactivées celles des fonctions (20), internes au véhicule, du véhicule automobile (12) qui ne présentent pas d'autorisation de fonction et qui sont encore activées ;
- dans lequel la liste de fonctions de véhicule (24) est produite dès que l'appareil serveur (14) externe au véhicule a produit au moins une instruction de désactivation concernant au moins une des fonctions (20) internes au véhicule, dans lequel aucune autorisation d'utilisation n'est donnée pour ces fonctions (20) internes au véhicule ;
- dans lequel l'instruction de désactivation est produite dès que se présente un dysfonctionnement de la fonction (20) interne au véhicule ou d'une autre fonction (20) interne au véhicule ;
- dans lequel il est garanti par une protection de manipulation interne au véhicule que la liste de fonctions de véhicule (24) transmise ne peut pas être modifiée.

2. Procédé selon la revendication 1,
**caractérisé en ce que**
la liste de fonctions de véhicule (24) est produite dès que l'appareil serveur (14) externe au véhicule a produit au moins une instruction d'activation concernant au moins une des fonctions (20) internes au véhicule, dans lequel une autorisation d'utilisation est donnée pour ces fonctions (20) internes au véhicule.

3. Procédé selon la revendication 1,
**caractérisé en ce que**
l'instruction de désactivation est produite dès qu'une durée de fonctionnement prescrite pour la fonction (20) interne au véhicule est écoulée.

4. Procédé selon l'une quelconque des revendications précédentes,
**caractérisé en ce que**
la liste de fonctions de véhicule (24) n'est transmise par le serveur (14) externe au véhicule à l'appareil de commande (16) du véhicule automobile (12) que si l'appareil de commande (16) a transmis à l'appareil serveur (14) externe au véhicule une clé d'authentification prescrite.

5. Procédé selon la revendication 4,
**caractérisé en ce que**
la clé d'authentification est enregistrée dans l'appareil de commande (16) de manière spécifique au véhicule ou de manière spécifique à l'identification d'utilisateur.

6. Procédé selon l'une quelconque des revendications précédentes,
**caractérisé en ce que**
ne sont activées et désactivées que celles des fonctions (20) internes au véhicule pour lesquelles des dispositifs de commande (22) respectifs conçus pour l'exploitation des fonctions (20) internes au véhicule ont transmis à l'appareil de commande (16) une clé d'authentification prescrite.

7. Système (10), comprenant au moins un véhicule automobile (12) avec un appareil de commande (16) et avec un appareil serveur (14) externe au véhicule qui sont conçus pour mettre en oeuvre un procédé selon l'une quelconque des revendications précédentes.
